# EUROPÄISCHE PATENTSCHRIFT

(11) **EP 3 977 851 B1**
(45) Veröffentlichungstag und Bekanntmachung des Hinweises auf die Patenterteilung: **08.03.2023**
(21) Anmeldenummer: 20199966.1
(22) Anmeldetag: 02.10.2020
(51) Int. Cl.: A01M 21/02, A01B 19/10, A01B 35/06, A01B 39/18, A01B 73/04

(54) **STRIEGELVORRICHTUNG ZUR BODENBEARBEITUNG MIT SYNCHRON VERSTELLBAREN STRIEGELZINKEN**
WEEDING HARROW FOR SOIL WORKING WITH SYNCHRONOUSLY ADJUSTABLE TINES
HERSE ÉTRILLE DESTINÉE AU TRAITEMENT DU SOL POURVUE DE DENTS À RÉGLAGE SYNCHRONE

(43) Veröffentlichungstag der Anmeldung: 06.04.2022
(73) Patentinhaber: Fliegl Agro-Center GmbH, 84556 Kastl (DE)
(72) Erfinder: Fliegl sen., Josef, 84556 Kastl (DE)
(74) Vertreter: Nußbaum, Christopher

(56) Entgegenhaltungen:
- DE-A1-102008 059 144
- RU-C1- 2 488 986
- US-A- 1 667 643
- US-A- 3 765 159
- US-A- 4 896 730
- US-A- 5 492 182

## Beschreibung

Die vorliegende Erfindung betrifft eine Striegelvorrichtung zur Bodenbearbeitung mit synchron verstellbaren Striegelzinken.

Striegelvorrichtungen, auch Hackstriegel genannt, sind ein der Egge ähnliches, landwirtschaftliches Arbeitsgerät, welches zur mechanischen Unkrautbekämpfung eingesetzt wird. Solche Striegelvorrichtungen können beispielsweise mittels eines Traktors über einen Acker gezogen werden. Üblicherweise umfassen solche Striegelvorrichtungen mehrere Striegelzinken in Form von Metallhaken, die insbesondere kleine Unkrautpflanzen in oberen Bodenschichten ausreißen und verschütten können. Stärkere Kulturpflanzen, beispielsweise Rüben, Weizen und dergleichen, bleiben bei der Verwendung solcher Striegelvorrichtungen üblicherweise stehen. Auf diese Weise können chemische Unkrautvernichtungsmittel vermieden werden, weshalb solche Striegelvorrichtungen insbesondere auch in der ökologischen Landwirtschaft eingesetzt werden.

Die US 3 765 159 A offenbart eine Strohentfernungsvorrichtung zum Entfernen von Stroh von Wiesen. Die Strohentfernungsvorrichtung weist mehrere Zinken auf, die mittels eines Schwenkhebels gemeinsam verstellbar sind. Durch die US 5 492 182 A ist eine Egge offenbart, die eine Mittensektion und zwei Flügelsektionen aufweist. An der jeweiligen Sektion ist eine jeweilige Zinkenanordnung angebracht, die je Sektion mittels eines jeweils separaten Hydraulikzylinders verstellt werden kann. Zudem kann der maschinellen Übersetzung der RU 2 488 986 C1 eine Egge für Großfelder entnommen werden, die einen Mittenteil daran befestigte Seitenteile umfasst. Das jeweilige Seitenteil kann um die Vertikale in Bezug zu dem Mittenteil mittels eines Schwenkgelenks verschwenkt werden. Weiter offenbart die US 4 896 730 A eine Unkrautentfernungsvorrichtung, die eine Vielzahl von Bodenbearbeitungselementen aufweist, die über den mit Nutzpflanzen bepflanzten Boden gezogen werden, um das Unkraut zu entfernen. Zum Verstellen der Bodenbearbeitungselemente kommt hierbei ein Hydraulikzylinder zum Einsatz.

Je nach zu bearbeitendem Boden beziehungsweise Acker kann es dabei wünschenswert sein, die üblicherweise als Metallhaken ausgebildeten Striegelzinken in unterschiedliche Stellungen auszufahren, um eine Eindringtiefe der Striegelzinken in den zu bearbeitenden Boden einzustellen.

Es ist die Aufgabe der vorliegenden Erfindung, eine Striegelvorrichtung zur Bodenbearbeitung bereitzustellen, die auf besonders einfache Weise die Einstellbarkeit einer Bearbeitungstiefe solcher Striegelzinken ermöglicht.

Diese Aufgabe wird durch eine Striegelvorrichtung zur Bodenbearbeitung mit den Merkmalen des Anspruchs 1 gelöst. Weitere mögliche Ausgestaltungen der Erfindung sind in den abhängigen Ansprüchen, in der Beschreibung und den Figuren angegeben.

Die erfindungsgemäße Striegelvorrichtung zur Bodenbearbeitung umfasst ein Fahrwerk und eine mit dem Fahrwerk verbundene Rahmenstruktur. Des Weiteren weist die Striegelvorrichtung mehrere bezogen auf die Längsrichtung der Striegelvorrichtung hintereinander angeordnete Zinkenreihen auf, die jeweils mehrere in Querrichtung der Striegelvorrichtung nebeneinander angeordnete Striegelzinken zur Bodenbearbeitung aufweisen. Die Zinkenreihen sind miteinander gekoppelt verschwenkbar an der Rahmenstruktur gelagert, sodass eine Verschwenkung der Zinkenreihen eine synchrone Verschwenkung der Striegelzinken zwischen verschieden weit ausgefahrenen Stellungen bewirkt. Insbesondere können die jeweiligen Zinkenreihen um Achsen verschwenkt werden, die zumindest im Wesentlichen in Querrichtung der Striegelvorrichtung verlaufen. Durch Verschwenken der Zinkenreihen wird also eine entsprechende Verschwenkung der jeweiligen Striegelzinken bewirkt, infolgedessen diese in unterschiedliche weit ausgefahrene Stellungen bewegt werden können, sodass eine Verstellung der jeweiligen Striegelzinken dahingehend erfolgen kann, dass deren Eindringtiefe in den Boden eingestellt beziehungsweise verändert wird.

Ein wesentlicher Vorteil der erfindungsgemäßen Striegelvorrichtung liegt darin, dass die Zinkenreihen miteinander gekoppelt verschwenkbar an der Rahmenstruktur gelagert sind. Das Verschwenken von einer der Zinkenreihen bewirkt also automatisch das Verschwenken der übrigen Zinkenreihen, was wiederum eine synchrone Verschwenkung beziehungsweise Verstellung der Striegelzinken bewirkt. Bei der erfindungsgemäßen Striegelvorrichtung ist es also nicht notwendig, die Zinkenreihen einzeln zu verschwenken beziehungsweise zu verstellen, um eine Eindringtiefe der Striegelzinken einzustellen. Denn bei der erfindungsgemäßen Striegelvorrichtung sind die Striegelzinken zumindest mittelbar miteinander verbunden beziehungsweise gekoppelt, sodass eine Verschwenkung der Striegelzinken immer synchron erfolgt. Die Striegelzinken müssen also nicht einzeln eingestellt beziehungsweise verschwenkt werden, genauso wenig die Zinkenreihen. Bei der erfindungsgemäßen Striegelvorrichtung kann also die Eindringtiefe der Striegelzinken besonders einfach und schnell und insbesondere synchron verändert werden.

Weiter weist die Striegelvorrichtung genau einen verstellbaren Anschlag auf, der die Verschwenkbewegung der Zinkenreihen und damit eine Arbeitstiefe der Striegelzinken begrenzt. Durch den Anschlag wird also die Verschwenkbewegung der Zinkenreihen eingeschränkt, sodass eine bestimmte gewollte Arbeitstiefe nicht unterschritten werden kann. Dadurch, dass der Anschlag verstellbar ist, ist es auf einfache Weise möglich, eine jeweils gewünschte Arbeitstiefe bei den Zinkenreihen und somit den Striegelzinken einzustellen. Je nachdem, wie weit der Anschlag ausgefahren oder eingefahren ist, begrenzt dieser also den Spielraum für Bewegungen beziehungsweise Verschwenkungen der Zinkenreihen, infolgedessen die Arbeitstiefe der Striegelzinken entsprechend begrenzt werden kann. Da die Bewegungen der Zinkenreihen miteinander gekoppelt sind, reicht ein einziger Anschlag aus, um die Arbeitstiefe bei den Striegelzinken einzustellen.

Eine weitere mögliche Ausgestaltung der Erfindung sieht vor, dass der Anschlag mittels einer Spindel, elektronisch und/oder mittels eines Bolzens und zugehörigen Stecksystems verstellbar und arretierbar ist. Über eine Spindel kann beispielsweise der Anschlag ganz einfach ausgefahren und eingefahren werden, um die Arbeitstiefe der Striegelzinken zu begrenzen beziehungsweise einzustellen. Das Ganze kann zusätzlich oder alternativ noch elektronisch erfolgen, beispielsweise über eine entsprechende Steuerung und einen entsprechenden Aktor. Auch ist es beispielsweise möglich, dass der Anschlag in einer entsprechenden Führung translatorisch beweglich gelagert ist, wobei ein Bolzen mit einem zugehörigen Stecksystem und entsprechenden Löchern vorgesehen sein kann, um den Anschlag an unterschiedlichen Positionen zu fixieren. Letzteres ermöglicht eine besonders einfache und manuelle Einstellbarkeit des Anschlags und somit der Arbeitstiefe der Striegelzinken.

In weiterer möglicher Ausgestaltung der Erfindung ist es vorgesehen, dass die Striegelvorrichtung nur einen Aktor zum Verschwenken aller Zinkenreihen aufweist. Durch die Kopplung der Bewegung der Zinkenreihen ist es möglich, nur einen einzigen Aktor zum Verschwenken aller Zinkenreihen zu verwenden. Je nach Gewicht und Maßen der Striegelvorrichtung ist es aber auch möglich, dass die Verstellvorrichtung mehrere Aktoren aufweist, um eine zuverlässige Verschwenkbewegung der Zinkenreihen und somit eine zuverlässige Einstellung der gewünschten Arbeitstiefe der Striegelzinken bewirken zu können. Als Aktor kann beispielsweise ein Hydraulikzylinder verwendet werden, wobei auch andere Antriebsmittel beziehungsweise Aktoren möglich sind.

Gemäß einer weiteren möglichen Ausgestaltung der Erfindung ist es vorgesehen, dass die Zinkenreihen jeweilige verschwenkbar an der Rahmenstruktur gelagerte Stangen aufweisen, an denen die Striegelzinken zumindest mittelbar befestigt sind, wobei die Stangen der Zinkenreihen miteinander gekoppelt sind. Die Stangen können beispielsweise an ihren jeweiligen Längsenden verdrehbar beziehungsweise verschwenkbar an der Rahmenstruktur gelagert sein. Die Stangen können wiederum über weitere Stangen unmittelbar oder mittelbar verbunden sein, mittels derer die Bewegungskopplung der Zinkenreihen sichergestellt werden kann.

Eine weitere mögliche Ausgestaltung der Erfindung sieht vor, dass die Rahmenstruktur ein Mittelteil und ein rechtes Seitenteil sowie ein linkes Seitenteil aufweist, die alle mit den Zinkenreihen versehen sind, wobei die Seitenteile zwischen einer heruntergeklappten Arbeitsstellung und einer hochgeklappten Transportstellung verschwenkbar am Mittelteil gelagert sind. Bei Bedarf kann so also eine besonders große Arbeitsbreite der Striegelvorrichtung realisiert werden, nämlich, wenn die beiden Seitenteile in ihrer heruntergeklappten Arbeitsstellung angeordnet sind. In der heruntergeklappten Arbeitsstellung kann es insbesondere vorgesehen sein, dass das Mittelteil und die Seitenteile auf derselben Höhe angeordnet sind. Spätestens wenn die Striegelvorrichtung über öffentliche Verkehrswege, insbesondere Straßen, bewegt werden muss, können die beiden Seitenteile in ihre hochgeklappte Transportstellung bewegt werden, sodass durch die Straßenverkehrsordnung festgelegte Maximalbreiten nicht überschritten werden.

In weiterer möglicher Ausgestaltung der Erfindung ist es vorgesehen, dass eine Verschwenkung der Seitenteile in die Transportstellung mit einer Verschwenkung der Striegelzinken in eine herangeklappte Fahrstellung gekoppelt ist. Die Striegelzinken sind in ihrer herangeklappten Fahrstellung maximal möglich an die Rahmenstruktur herangeschwenkt beziehungsweise herangeklappt. Dadurch, dass die Verschwenkung der Seitenteile in die Transportstellung mit der Verschwenkung der Striegelzinken in ihre herangeklappte Fahrstellung gekoppelt ist, kann in der Transportstellung sichergestellt werden, dass die Striegelzinken möglichst wenig seitlich hervorstehen und somit die Breite der Striegelvorrichtung zumindest im Wesentlichen gar nicht weiter beeinflussen. Dadurch kann die Rahmenstruktur der Striegelvorrichtung ziemlich breit ausgeführt werden, da die Striegelzinken in der Transportstellung der Seitenteile so gut wir gar nicht zur Breite der Striegelvorrichtung beitragen.

Gemäß einer weiteren möglichen Ausgestaltung der Erfindung ist es vorgesehen, dass die Kopplung der Verschwenkung der Seitenteile in die Transportstellung mit der Verschwenkung der Striegelzinken in die herangeklappte Fahrstellung mechanisch und/oder hydraulisch realisiert ist. Eine hydraulische Realisierung kann beispielsweise derart sein, dass jeweilige Hydraulikzylinder vorgesehen sind, um einerseits die Striegelzinken zu verschwenken und andererseits die Seitenteile hochzuklappen beziehungsweise herunterzuklappen. Durch Betätigung entsprechender Ventile in einem Hydraulikkreislauf kann sichergestellt werden, dass eine hydraulische Kopplung derart realisiert ist, dass das Verschwenken der Seitenteile in die Transportstellung automatisch auch das Verschwenken der Striegelzinken in ihre herangeklappte Fahrstellung bewirkt. Eine mechanische Kopplung kann beispielsweise durch entsprechende Koppelgetriebe oder anderweitige Maßnahmen realisiert sein, sodass beim Verschwenken der Seitenteile automatisch mit Einnehmen der Transportstellung die Striegelzinken in ihre herangeklappte Fahrstellung bewegt werden.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Perspektivansicht einer Striegelvorrichtung zur Bodenbearbeitung;
- Fig. 2: eine Perspektivansicht eines Ausschnitts der Striegelvorrichtung, in dem ein verstellbarer Anschlag der Striegelvorrichtung zu erkennen ist;
- Fig. 3: eine teilweise geschnittene Seitenansicht der Striegelvorrichtung, wobei verschiedene Striegelzinken der Striegelvorrichtung in unterschiedlich weit ausgeklappten beziehungsweise heruntergeklappten Stellungen zu erkennen sind;
- Fig. 4: eine weitere teilweise geschnittene Seitenansicht der Striegelvorrichtung, wobei die Striegelzinken in einer herangeklappten beziehungsweise hochgeklappten Fahrstellung angeordnet sind;
- Fig. 5: eine Frontalansicht der Striegelvorrichtung, wobei jeweilige Seitenteile der Striegelvorrichtung in eine Transportstellung nach oben geklappt worden sind.

Gleiche oder funktionsgleiche Elemente sind in den Figuren mit den gleichen Bezugszeichen versehen.

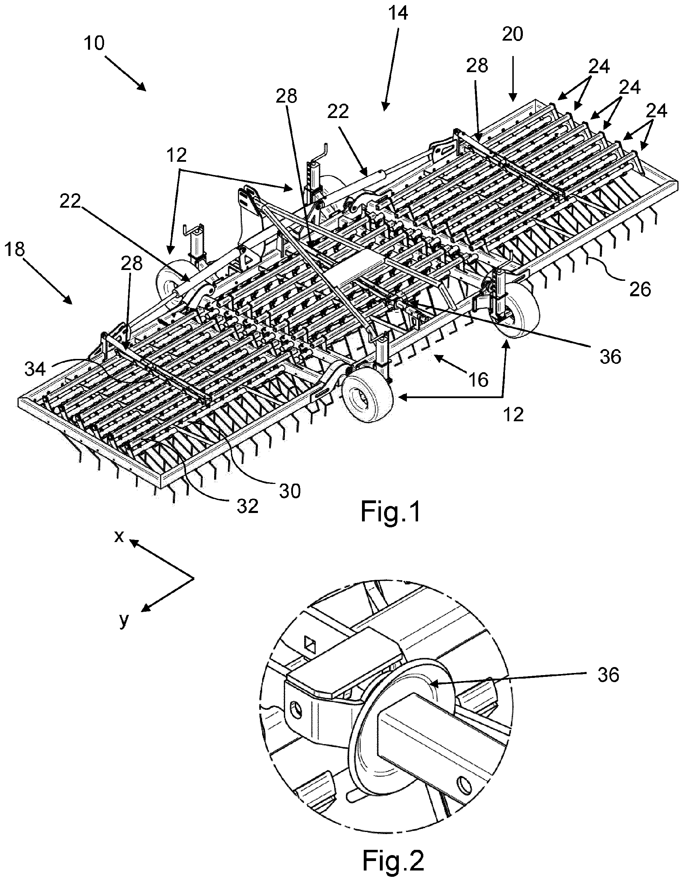

Eine Striegelvorrichtung 10 zur Bodenbearbeitung ist in einer Perspektivansicht in Fig. 1 gezeigt. Die Striegelvorrichtung 10 umfasst ein Fahrwerk 12 mit mehreren nicht näher bezeichneten Rädern. Des Weiteren weist die Striegelvorrichtung 10 eine mit dem Fahrwerk 12 verbundene Rahmenstruktur 14 auf. Die Rahmenstruktur 14 umfasst ein Mittelteil 16 sowie ein linkes Seitenteil 18 und ein rechtes Seitenteil 20. Die Seitenteile 18, 20 können mittels jeweiliger Hydraulikzylinder 22 zwischen der hier gezeigten heruntergeklappten Arbeitsstellung und einer hochgeklappten Transportstellung relativ zum Mittelteil 16 verschwenkt werden und sind dafür verschwenkbar an diesem gelagert.

Bezogen auf die Längsrichtung x der Striegelvorrichtung 10 weist diese mehrere hintereinander angeordnete Zinkenreihen 24 auf, wobei der Übersichtlichkeit halber nicht alle Zinkenreihen 24 vorliegend mit Bezugszeichen versehen worden sind. Beide Seitenteile 18, 20 und das Mittelteil 16 sind jeweils mit sechs solcher Zinkenreihen 24 ausgestattet. Die Anzahl der Zinkenreihen 24 ist selbstverständlich nur rein beispielhaft zu verstehen und kann je nach Anwendungsfall auch unterschiedlich ausfallen.

Jede Zinkenreihe 24 weist mehrere in Querrichtung y der Striegelvorrichtung 10 nebeneinander angeordnete Striegelzinken 26 zur Bodenbearbeitung auf. Der Übersichtlichkeit halber wurde nur einer der Striegelzinken 26 vorliegend mit einem Bezugszeichen versehen. Bei den Striegelzinken 26 kann es sich insbesondere um Metallhaken handeln.

Die jeweiligen Zinkenreihen 24 sind miteinander gekoppelt verschwenkbar an der Rahmenstruktur 14 gelagert, sodass eine Verschwenkung der Zinkenreihen 24 eine synchrone Verschwenkung der Striegelzinken 26 zwischen verschieden weit ausgefahrenen Stellungen bewirkt.

Vorliegend weist die Striegelvorrichtung 10 drei Hydraulikzylinder 28 auf, die dazu eingerichtet sind, die Zinkenreihen 24 am Mittelteil 16 und an den Seitenteilen 18, 20 zu verschwenken, um die Striegelzinken 26 zwischen verschieden weit ausgefahrenen Stellungen zu verschwenken. Auf diese Weise ist es möglich, die Striegelzinken 26 unterschiedlich weit nach unten auszufahren beziehungsweise nach oben einzufahren, sodass eine Bearbeitungstiefe für einen zu bearbeitenden Boden ganz einfach eingestellt werden kann. Die Zinkenreihen 24 müssen also nicht einzeln verstellt werden, geschweige denn die Striegelzinken 26. Stattdessen müssen im hier gezeigten Fall lediglich die Hydraulikzylinder 28 betätigt werden, um an den Seitenteilen 18, 20 und am Mittelteil 16 die Zinkenreihen 24 und somit die Striegelzinken 26 synchron miteinander zu verschwenken beziehungsweise zu verstellen.

Die Striegelzinken 26 sind je Zinkenreihe 24 an jeweiligen Stangen 30 befestigt, die Bestandteil der jeweiligen Zinkenreihen 24 sind. Diese Stangen 30 sind verschwenkbar an der Rahmenstruktur 14, also am Mittelteil 16 beziehungsweise an den Seitenteilen 18, 20 gelagert. Des Weiteren weisen die Zinkenreihen 24 im hier gezeigten Fall Koppelstangen 32 auf, die zumindest mittelbar mit den Stangen 30 verbunden sind. Die Koppelstangen 32 sind wiederum über jeweilige Verbindungsstangen 34 miteinander verbunden, an denen die jeweiligen Hydraulikzylinder 28 angreifen. Der Übersichtlichkeit halber wurden die Stangen 30, Koppelstangen 32 und Verbindungsstangen 34 nur jeweils einmal mit Bezugszeichen versehen.

Die Striegelvorrichtung 10 umfasst des Weiteren einen Anschlag 36, der in Fig. 1 aufgrund des gewählten Maßstabs nur teilweise zu erkennen ist.

In Fig. 2 ist dieser Anschlag 36 in einer vergrößerten Ansicht gezeigt. Dieser Anschlag 36 ist verstellbar ausgebildet und kann die Verschwenkbewegung der Zinkenreihen 24 und damit eine Arbeitstiefe der Striegelzinken 26 begrenzen. Der Anschlag 36 kann beispielsweise mittels einer Spindel, elektronisch und/oder mittels eines Bolzens und zugehörigen Stecksystems verstellbar und arretierbar ausgebildet sein.

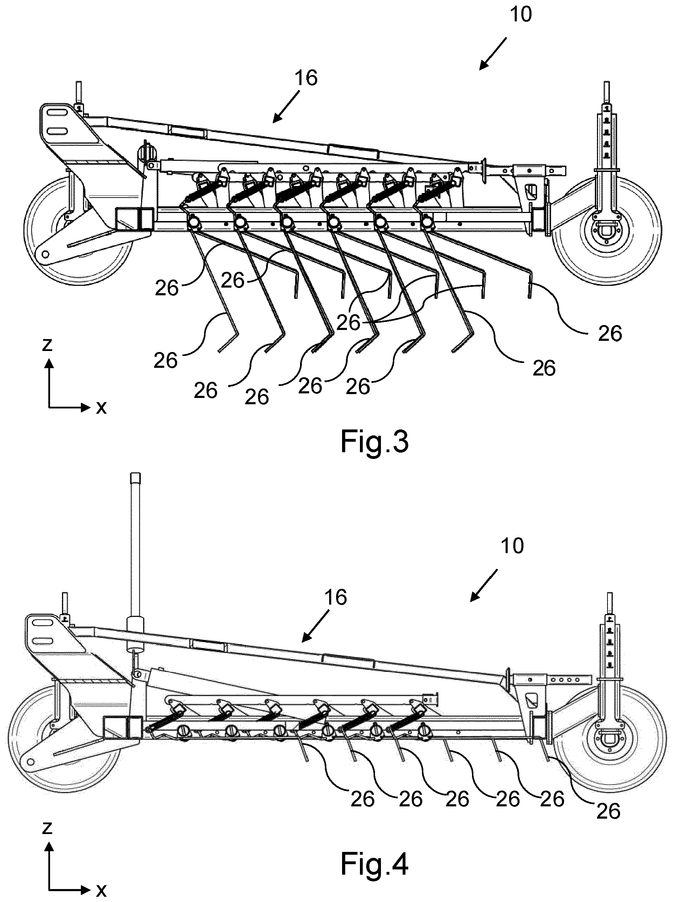

In Fig. 3 ist die Striegelvorrichtung 10 in einer teilweise geschnittenen Seitenansicht gezeigt. Vorliegend kann man die am Mittelteil 16 angeordneten Striegelzinken 26 erkennen, wobei diese in verschieden weit ausgefahrene beziehungsweise verschwenkten Stellungen gezeigt sind. Hier kann man deutlich erkennen, dass durch Verschwenken der Striegelzinken 26 um jeweilige in Querrichtung y verlaufende Achsen eine Bearbeitungstiefe der Striegelzinken 26 eingestellt werden kann.

In Fig. 4 ist die Striegelvorrichtung 10 in einer weiteren teilweise geschnittenen Seitenansicht gezeigt. Hier sind ebenfalls die am Mittelteil 16 angebrachten Striegelzinken 26 zu erkennen, wobei diese in ihrer hochgeklappten Transportstellung gezeigt sind. In dieser Transportstellung sind die Striegelzinken 26 maximal möglich beziehungsweise maximal nah an die Rahmenstruktur 14 beziehungsweise an das Mittelteil 16 herangeklappt. Beim Mittelteil 16 wird dadurch eine entsprechende Bodenfreiheit sichergestellt, wenn die Striegelvorrichtung 10 nicht zur Bodenbearbeitung verwendet wird und beispielsweise von einem Ort zum nächsten transportiert werden muss.

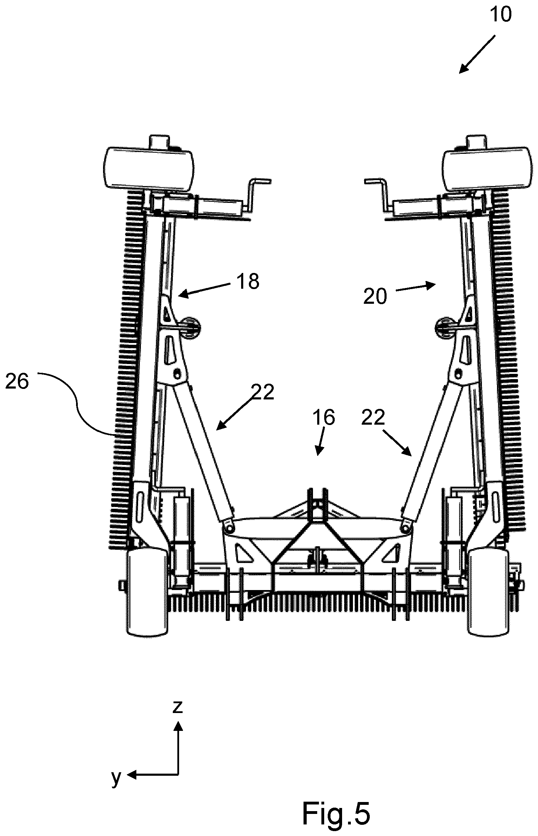

In Fig. 5 ist die Striegelvorrichtung 10 in einer Frontalansicht gezeigt, wobei die Seitenteile 18, 20 durch entsprechende Betätigung der Hydraulikzylinder 22 in ihre nach oben geklappte beziehungsweise hochgeklappte Transportstellung bewegt worden sind. Eine Verschwenkung der Seitenteile 18, 20 in die hier gezeigte Transportstellung ist mit einer Verschwenkung der Striegelzinken 26 in ihre herangeklappte Fahrstellung gekoppelt, welche insbesondere in Fig. 4 deutlich zu erkennen ist. Dadurch, dass die Striegelzinken 26 automatisch ihre herangeklappte Fahrstellung einnehmen, sobald die Seitenteile 18, 20 in die hier gezeigte Transportstellung nach oben geklappt worden sind, tragen die Striegelzinken 26 nicht oder nur unwesentlich zur Breite der Striegelvorrichtung 10 bei. Die Kopplung der Verschwenkung der Seitenteile 18, 20 in die Transportstellung mit der Verschwenkung der Striegelzinken 26 in die herangeklappte Fahrstellung kann mechanisch und/oder hydraulisch realisiert sein. Eine hydraulische Realisierung kann beispielsweise dadurch erzielt werden, indem die Hydraulikzylinder 22, die zum Hochschwenken beziehungsweise Herunterklappen der Seitenteile 18, 20 verwendet werden, mit den Hydraulikzylindern 28 (siehe Fig. 1) entsprechend gekoppelt sind, was beispielsweise durch eine passende Ansteuerung entsprechender Ventile eines Hydraulikkreislaufs realisiert sein kann. Eine mechanische Kopplung der Verstellbewegung der Seitenteile 18, 20 mit dem Heranklappen der Striegelzinken 26 in ihre Fahrstellung kann auch auf verschiedenste Arten mechanisch erfolgen, beispielsweise durch Koppelgetriebe und dergleichen.

Mittels der erläuterten Striegelvorrichtung 10 ist es auf ganz einfache und schnelle Weise möglich, eine Bearbeitungstiefe der Striegelzinken 26 einzustellen, da ein Verschwenken der Zinkenreihen 24 (siehe Fig. 1). Miteinander gekoppelt ist, sodass eine Verschwenkung der Zinkenreihen 24 auch eine synchrone Verschwenkung der Striegelzinken 26 zur Folge hat. Weder die Zinkenreihen 24 noch die Striegelzinken 26 müssen also einzeln verstellt werden, um eine Bearbeitungstiefe der Striegelzinken 26 einzustellen. Im Extremfall kann beispielsweise auch ein einzelner Hydraulikzylinder ausreichen, um eine Zinkenreihe 24 direkt anzusteuern, wobei die anderen Zinkenreihen 24 dann mit dieser Zinkenreihe 24 bewegungstechnisch gekoppelt sein können.

Auch ist es möglich, wie in Fig. 1 gezeigt, beispielsweise drei solcher Hydraulikzylinder 28 vorzusehen, um die an den verschiedenen Teilen 16, 18, 20 angeordneten Zinkenreihen 24 synchron miteinander zu verstellen.

### BEZUGSZEICHENLISTE

- 10: Striegelvorrichtung
- 12: Fahrwerk
- 14: Rahmenstruktur
- 16: Mittelteil
- 18: linkes Seitenteil
- 20: rechtes Seitenteil
- 22: Hydraulikzylinder
- 24: Zinkenreihen
- 26: Striegelzinken
- 28: Hydraulikzylinder
- 30: Stangen der Zinkenreihen
- 32: Koppelstangen
- 34: Verbindungsstangen
- 36: Anschlag
- x: Längsrichtung der Striegelvorrichtung
- y: Querrichtung der Striegelvorrichtung
- z: Hochrichtung der Striegelvorrichtung

## Patentansprüche

1. Striegelvorrichtung (10) zur Bodenbearbeitung, umfassend
- ein Fahrwerk (12);
- eine mit dem Fahrwerk (12) verbundene Rahmenstruktur (14);
- mehrere bezogen auf die Längsrichtung (x) der Striegelvorrichtung (10) hintereinander angeordnete Zinkenreihen (24), die jeweils mehrere in Querrichtung (y) der Striegelvorrichtung (10) nebeneinander angeordnete Striegelzinken (26) zur Bodenbearbeitung aufweisen;
- wobei die Zinkenreihen (24) miteinander gekoppelt verschwenkbar an der Rahmenstruktur (14) gelagert sind, sodass eine Verschwenkung der Zinkenreihen (24) eine synchrone Verschwenkung der Striegelzinken (26) zwischen verschieden weit ausgefahrenen Stellungen bewirkt;
**dadurch gekennzeichnet, dass**
- die Striegelvorrichtung (10) genau einen verstellbaren Anschlag (36) aufweist, der, je nachdem, wie weit er ausgefahren oder eingefahren ist, die Verschwenkbewegung der Zinkenreihen (24) und damit eine Arbeitstiefe der Striegelzinken (26) begrenzt.

2. Striegelvorrichtung (10) nach Anspruch 1,
**dadurch gekennzeichnet, dass**
der Anschlag (36) mittels einer Spindel verstellbar und arretierbar ist.

3. Striegelvorrichtung (10) nach Anspruch 1 oder 2,
**dadurch gekennzeichnet, dass**
der Anschlag (36) elektronisch verstellbar und arretierbar ist.

4. Striegelvorrichtung (10) nach einem der vorhergehenden Ansprüche,
**dadurch gekennzeichnet, dass**
der Anschlag (36) translatorisch beweglich in einer entsprechenden Führung gelagert ist und mittels eines Bolzens und zugehörigen Stecksystems an unterschiedlichen Positionen fixierbar ist.

5. Striegelvorrichtung (10) nach einem der vorhergehenden Ansprüche,
**dadurch gekennzeichnet, dass**
die Striegelvorrichtung (10) eine Verstellvorrichtung mit nur einem Aktor zum Verschwenken aller Zinkenreihen (24) aufweist.

6. Striegelvorrichtung (10) nach einem der vorhergehenden Ansprüche,
**dadurch gekennzeichnet, dass**
die Zinkenreihen (24) jeweilige verschwenkbar an der Rahmenstruktur (14) gelagerte Stangen (30) aufweisen, an denen die Striegelzinken (26) zumindest mittelbar befestigt sind, wobei die Stangen (30) der Zinkenreihen (24) miteinander gekoppelt sind.

7. Striegelvorrichtung (10) nach einem der vorhergehenden Ansprüche,
**dadurch gekennzeichnet, dass**
die Rahmenstruktur (14) ein Mittelteil (16) und ein rechtes Seitenteil (20) sowie ein linkes Seitenteil (18) aufweist, die alle mit den Zinkenreihen (24) versehen sind, wobei die Seitenteile (18, 20) zwischen einer heruntergeklappten Arbeitsstellung und einer hochgeklappten Transportstellung verschwenkbar am Mittelteil (16) gelagert sind.

8. Striegelvorrichtung (10) nach Anspruch 7,
**dadurch gekennzeichnet, dass**
eine Verschwenkung der Seitenteile (18, 20) in die Transportstellung mit einer Verschwenkung der Striegelzinken (26) in eine herangeklappte Fahrstellung gekoppelt ist.

9. Striegelvorrichtung (10) nach Anspruch 8,
**dadurch gekennzeichnet, dass**
die Kopplung der Verschwenkung der Seitenteile (18, 20) in die Transportstellung mit der Verschwenkung der Striegelzinken (26) in die herangeklappte Fahrstellung mechanisch und/oder hydraulisch realisiert ist.

## Claims

1. Weeding harrow (10) for soil working, comprising
- a chassis (12);
- a frame structure (14) connected to the chassis (12);
- a plurality of rows of tines (24) arranged one behind the other with respect to the longitudinal direction (x) of the weeding harrow (10) and each having a plurality of tines (26) arranged next to one another in the transverse direction (y) of the weeding harrow (10) for working the soil;
- wherein the rows of tines (24) are pivotally mounted to the frame structure (14) in a coupled manner so that pivoting of the rows of tines (24) causes synchronous pivoting of the tines (26) between positions that are extended to different extents;
**characterised in that**
- the weeding harrow (10) has precisely one adjustable stop (36) which, depending on how far it is extended or retracted, limits the pivoting movement of the rows of tines (24) and thus a working depth of the tines (26).

2. Weeding harrow (10) according to claim 1,
**characterised in that**
the stop (36) is adjustable and lockable by means of a spindle.

3. Weeding harrow (10) according to claim 1 or 2,
**characterised in that**
the stop (36) is electronically adjustable and lockable.

4. Weeding harrow (10) according to any of the preceding claims,
**characterised in that**
the stop (36) is mounted so as to be translationally movable in a corresponding guide and can be fixed in different positions by means of a pin and associated plug-in system.

5. Weeding harrow (10) according to any of the preceding claims,
**characterised in that**
the weeding harrow (10) has an adjustment device with only one actuator for pivoting all rows of tines (24).

6. Weeding harrow (10) according to any of the preceding claims,
**characterised in that**
the rows of tines (24) have respective rods (30) pivotally mounted on the frame structure (14), to which the tines (26) are at least indirectly fastened, the rods (30) of the rows of tines (24) being coupled to one another.

7. Weeding harrow (10) according to any of the preceding claims,
**characterised in that**
the frame structure (14) comprises a central part (16) and a right side part (20) and a left side part (18), all of which are provided with the rows of tines (24), the side parts (18, 20) being pivotally mounted on the central part (16) between a folded-down working position and a folded-up transport position.

8. Weeding harrow (10) according to claim 7,
**characterised in that**
pivoting of the side parts (18, 20) into the transport position is coupled with pivoting of the tines (26) into a folded travel position.

9. Weeding harrow (10) according to claim 8,
**characterised in that**
the coupling of the pivoting of the side parts (18, 20) into the transport position with the pivoting of the tines (26) into the folded travel position is implemented mechanically and/or hydraulically.

## Revendications

1. Dispositif de brosse (10) pour le traitement du sol comprenant
- un train de roulement (12) ;
- une structure de châssis (14) reliée au train de roulement (12) ;
- plusieurs rangées de dents (24) agencées les unes derrière les autres par rapport au sens longitudinal (x) du dispositif de brosse (10), qui présentent respectivement plusieurs dents de brosse (26) agencées les unes à côté des autres dans le sens transversal (y) du dispositif de brosse (10) pour le traitement du sol ;
- dans lequel les rangées de dents (24) sont logées de manière pivotante en étant couplées les unes aux autres au niveau de la structure de châssis (14) de sorte qu'un pivotement des rangées de dents (24) provoque un pivotement synchrone des dents de brosse (26) entre des positions sorties à différentes distances ;
**caractérisé en ce que**
- le dispositif de brosse (10) présente précisément une butée (36) réglable qui délimite le mouvement pivotant des rangées de dents (24) et ainsi une profondeur de travail des dents de brosse (26) selon la distance à laquelle elle est sortie ou entrée.

2. Dispositif de brosse (10) selon la revendication 1,
**caractérisé en ce que**
la butée (36) peut être réglée et arrêtée au moyen d'une broche.

3. Dispositif de brosse (10) selon la revendication 1 ou 2,
**caractérisé en ce que**
la butée (36) peut être réglée et arrêtée électroniquement.

4. Dispositif de brosse (10) selon l'une quelconque des revendications précédentes,
**caractérisé en ce que**
la butée (36) est logée de manière mobile en translation dans un guidage correspondant et peut être fixée au moyen d'un boulon et d'un système d'enfichage afférent dans des positions différentes.

5. Dispositif de brosse (10) selon l'une quelconque des revendications précédentes,
**caractérisé en ce que**
le dispositif de brosse (10) présente un dispositif de réglage avec un seul actionneur pour le pivotement de toutes les rangées de dents (24).

6. Dispositif de brosse (10) selon l'une quelconque des revendications précédentes,
**caractérisé en ce que**
les rangées de dents (24) présentent des tiges (30) respectives logées de manière pivotante au niveau de la structure de châssis (14), au niveau desquelles les dents de brosse (26) sont fixées au moins indirectement, dans lequel les tiges (30) des rangées de dents (24) sont couplées les unes aux autres.

7. Dispositif de brosse (10) selon l'une quelconque des revendications précédentes,
**caractérisé en ce que**
la structure de châssis (14) présente une partie médiane (16) et une partie latérale droite (20) ainsi qu'une partie latérale (18) gauche qui sont toutes pourvues des rangées de dents (24), dans lequel les parties latérales (18, 20) sont logées entre une position de travail abaissée et une position de transport relevée de manière pivotante au niveau de la partie médiane (16).

8. Dispositif de brosse (10) selon la revendication 7,
**caractérisé en ce que**
un pivotement des parties latérales (18, 20) dans la position de transport est couplé à un pivotement des dents de brosse (26) dans une position de déplacement repliée.

9. Dispositif de brosse (10) selon la revendication 8,
**caractérisé en ce que**
le couplage du pivotement des parties latérales (18, 20) dans la position de transport avec le pivotement des dents de brosse (26) dans la position de déplacement repliée est réalisé de manière mécanique et/ou hydraulique.
